# EUROPEAN PATENT SPECIFICATION

(11) **EP 1 161 300 B1**
(45) Date of publication and mention of the grant of the patent: **02.01.2003**
(21) Application number: 99970039.6
(22) Date of filing: 01.10.1999
(51) Int. Cl.: B02B 5/02, A23L 1/30

(54) **PROCESSING OF FLAXSEED**
BEHANDLUNG VON FLACHS-SAATGUT
TRAITEMENT DES GRAINES DE LIN

(30) Priority: 01.10.1998 FI 982125
(43) Date of publication of application: 12.12.2001
(73) Proprietor: HK Ruokatalo Oyj, 01511 Vantaa (FI); Elixi Oil OY, 31400 Somero (FI)
(72) Inventor: MYLLYMÄKI, Olavi, FIN-02210 Espoo (FI)
(74) Representative: Pelin, Torolf
(86) International application number: FI9900811
(87) International publication number: WO00020119

(56) References cited:
- EP-A2- 0 321 783
- CA-A1- 2 167 951
- WANASUNDARA P.K.J.P.D. ET AL.: 'Removal of flaxseed mucilage by chemical and ensymatic treatments' FOOD CHEMISTRY vol. 59, no. 1, 1997, GREAT BRITAIN, pages 47 - 55, XP000915714
- CUI W.S.: 'Flaxseed: A Functional Food for the 21st Century' CANADIAN CHEMICAL NEWS vol. 50, no. 5, May 1998, OTTAWA, CA, pages 19 - 20, XP000916302

## Description

### Technological background

The invention relates to the processing of flaxseed (*Linum sp*.) in order to produce a food supplement.

The flaxseed husk consists of three separate anatomic parts. The outer part consists of a water-soluble mucilage, the epidermic layer. Under the mucilage, there is the actual husk substance, the spermoderme, consisting of four layers. The inner husk surface is the endosperme, and the seed core consists of the cotyledon, which accounts for about half of the weight of the seed. The major portion of the oil and protein of the seed is located in the cotyledon. Seeds have been used as such or in a ground form in animal feed and human nutrition. The mucilage separated from the husk has also been used in medicinal and cosmetic products.

Flaxseed has also been husked in order to separate the husk portion from the inner portion (Wanasundra & Shahidi, Food Chem, 59 (1997) 47-55). Nevertheless, husking is a laborious and awkward process due particularly to the seed shape. Abrasive methods have been implemented in the husking.

Oil can be separated from flaxseed by pressing or extracting. The solid residue has been mainly used as an animal feed. It has been generally considered inapt for use as a foodstuff (Oomah & Mazza, Food. Chem., 48 (1993), 109-114), but has been used all the same, especially in bakery products. Its use is restricted especially by the flavour and colour changes in the foodstuff, which are felt to be unpleasant.

Flaxseed also contains lignans in an amount of 80-370 mg/100 g (Mazur et al., Anal. Biochem., 233 (1996) 169-180). In nutrition, lignans have proved to provide health benefits, i.a. anti-carcinogenic effects.

A method for removing flaxseed husk from the seed core by abrasion is known from CA-A-2 167 951.

### General description of the invention

A method has now been found in which the husk layer is removed from whole flaxseed and the husk is subsequently divided into a firstly removed mucilage fraction and a secondly removed fibre fraction. The mucilage fraction comprises the outermost husk layers and is rich in water-dispersible carbohydrates (mucilage). The fibre fraction comprises the inner husk layers and is particularly rich in fibres and lignans The abrasion can be performed in a mill specifically equipped with millstones.

The husk removing method of the invention serves to detach separate fractions suitable for different purposes of use in one single process.

A method has now also been found, in which flaxseed solid substance obtained by separating oil from the seed is bleached by treating it with a mixture of water and alcohol. The bleaching mixture may contain hydrogen peroxide in addition. Husks or husk fractions separated from whole seeds can also be bleached with the bleaching method of the invention.

The bleaching method of the invention yields a product, which, used as a food supplement, causes less changes in colour and flavour than a non-processed solid substance does.

### Detailed description of the invention

The outermost flaxseed layer comprises principally water-soluble carbohydrates and forms the flaxseed mucilage. Under this, there is a layer comprising mainly fibres. When a whole unbroken flaxseed is abrased, the outer layer is first removed. This layer is separated as a mucilage fraction. Then the inner layer comes off, being separated as a fibre fraction. This fraction is also rich in lignans. The remainder comprises the inner seed portion, which is rich in oil and proteins. The inner portion accounts for approximatley half of the weight of the seed.

The mucilage fraction is usable in foodstuffs especially as a viscosity-increasing agent in breads, for instance. The mucilage fraction is also usable in cosmetic and medicinal products. The rheological behaviour of the mucilage fraction is similar to that of arabic gum.

The mucilage fraction accounts for about 0.5-10% of the weight of the seed, such as 5-8%. The mucilage fraction draws along some of the inner portion of the husk.

The fibre fraction is usable as a food supplement particularly when an increase in fibres and lignans is desired. Lignans have proved to provide health benefits. They seem to act as anti-carcinogenes, among other things. The fibre fraction naturally comprises a certain amount of oil. The oil can be removed by means of hexane for instance. A fraction particularly rich in fibres can also be separated from the fibre fraction. A lignan concentrate can be further produced from the fibre fraction e.g. by screening or grading, especially if the oil is first removed. Lignan can be concentrated also by means of extraction.

The fibre fraction accounts for about 20-70%, such as 30-50%, especially 35-45% of the weight of the seed.

Oil can be separated from the inner part of the seed, the residue being rich in proteins. A protein part with a particularly high, up to 70% protein content, and a mucilage fraction can be further separated from the residue.

The abrasion is performed by seeking to maintain the inner part of the seed as complete as possible to allow it to be separated from the abrased powder. The abrasion can be performed using commonly used abrasing devices. The devices can be modified rice polishing devices, for instance. The abrasion is performed by seeking to detach the husk portion as completely as possible, while removing only a minimum of the inner portion. The abrasion can be performed as a continuous process.

The seeds can be abrased for instance in a mill equipped with millstones. The rough surfaces of the millstones abrase the seeds at a given rate, preferably for about 1-3 minutes. The abrased powder has been found to have a particularly high lignan content after an abrasion period of about 1 minute.

The fibre fraction is a brownish powder. It can be bleached and simultaneously deflavoured, degreased and upgraded.

In the bleaching, the powder is moisturised with water, the ratio of water to powder varying e.g. in the range from 1:1 to 3:1. Enzymes such as lipase or protease can be added to the water. The water is allowed to act for e.g. 0.5-12 h, and then the paste is homogenised in alcohol, such as C1-C5 alcohol, especially ethanol or isopropanol, particularly in isopropanol. The alcohol amount is e.g. 2-5 times the powder amount. The homogenised alcohol-containing suspension is separated from the solution e.g. by filtering or centrifugating. The separated powder is washed e.g. with a 2-6-fold alcohol amount, and after this the suspension is preferably filtered and centrifugated. The alcoholic mass is dried e.g. at 20-90 °C. The dried paste is ground or granulated to the desired grain size if necessary.

The alcohol breaks down the viscosity generated by the alcohol-insoluble but water-soluble carbohydrate constituent. This makes it easy to homogenise the paste to a non-viscous suspension and to perform the mechanical separating treatments of the suspension, such as filtering and centrifugation. The water treatment results in the solid structure opening up so that the major portion of the remaining oil in the paste is removed during the water-alcohol treatment. The more finely ground the powder, the stronger the effect. The alcohol added after the water treatment serves to precipitate the water-soluble carbohydrate, detaching it from the surrounding matrix. This allows for instance the dry product to be concentrated into a water-soluble component by mechanical means, such as grading.

The bleaching also removes cyanogens from the product.

A better result than with mere water-alcohol treatment is achieved by adding e.g. 2-7% of hydrogen peroxide to the aqueous solution at the elutriation stage. Hydrogen peroxide added before alcohol detaches mucilages from the surface efficiently.

Before the bleaching, the powder can be thermally treated in order to inactivate any enzyme activity affecting the flavour. The temperature range may be e.g. 40-80 °C and the treatment period e.g. 0.5-2 h. The treatment can be performed in vacuum. Besides inactivating enzymes, the temperature and possible vacuum have the joint effect of removing low-molecular compounds affecting the taste.

A solid residue remaining after oil has been separated from whole flaxseed (flaxseed groats), especially a residue obtained by pressing, can also be bleached with the method of the invention. The groats are preferably ground before the bleaching e.g. by means of an emery mill with a pair of millstones.

### Example 1

A device designed for oat abrasion was used in the flaxseed abrasion. The seeds were abrased between the millstones and the metal mesh in a batch device (batches of 80 g) equipped with two millstones. At the end of the abrasion, the seeds were removed from the device through a hatch at the mesh bottom. During the process, the abrased powder passed through the mesh into a receiver. Table 1 shows the abrased fraction yield and the protein, fat and lignan concentrations as a function of abrasion time.

**Table 1.**

| Abrased laxseed (*Linum usitatissimum*, Helmi ssp.) powder yield and protein, fat and lignan concentration calculated on the dry substance. | | | | |
|---|---|---|---|---|
| Abrasion | time Protein (% d.s.) | Fat (% d.s.) | Lignan | Yield (%) |
| (min) | | | mg/100 g | |
| 1 | 12 | 18 | 1480 | 4 |
| 2 | 15 | 27 | 1360 | 9 |
| 3 | 17 | 29 | 1230 | 12 |
| 4 | 18 | 31 | 1070 | 16 |
| 5 | 19 | 34 | 1070 | 18 |
| 6 | 19 | 34 | 960 | 21 |
| 7 | 19 | 36 | 1030 | 22 |
| 8 | 20 | 36 | 800 | 24 |

The powder obtained is usable as a reactant in further lignin concentration. By extracting the oil from the abrased powder e.g. by hexane extraction, the lignin concentration of the powder will increase by an amount equal to the oil content, i.e. by 18% after 1 minute of abrasion. The powder can be further bleached for instance as described in example 2.

### Example 2

Flaxseed groats obtained in a cold-drawing process were bleached. The groats were subjected to thermal treatment in order to inactivate any enzyme activity affecting the flavour of the groats. The best sensory result was obtained by thermally treating the groats for 1 h in vacuum at 60 °C. The dark brown groats obtained were elutriated in water at room temperature, forming a paste-like powder. After a settling of about 0.5-2 hours the paste-like powder was elutriated in isopropanol at a ratio of 1.2-3 (w/w). The crushed flaxseed suspension obtained was filtrated in vacuum. The deposit obtained, i.e. the filterpress cake, was washed during homogenisation in isopropanol, was refiltered in vacuum or centrifugated in a decanter centrifuge. The filtrated powder was dried at room temperature or using a closed drying technique, allowing isopropanol to be recovered.

A better result than the one obtained with mere water-alcohol treatment was obtained by adding hydrogen peroxide to the aqueous solution at the elutriation stage. A very light powder was obtained by elutriating the groats in an aqueous solution with a 4-5% hydrogen peroxide content. After an elutriation time of 0.5-2 h the paste-like powder was homogenised in a double amount of isopropanol, filtered in vacuum, washed in isopropanol and refiltered. The filtered powder was dried.

A product particularly rich in proteins was obtained when isopropanol accounted for 50% of the solution and peroxide for about 5% of the solution.

## Claims

1. A method for removing the flaxseed husk from the seed core by abrasion, **characterised in that** the firstly removed outer portion of the husk is separated as a mucilage fraction and then the secondly removed inner portion is separated as a fibre fraction.

2. A method as defined in claim 1, in which the separated mucilage fraction accounts for 3-10%, such as 5-8% of the weight of the seed.

3. A method as defined in claim 1 or 2, in which the separated fibre fraction accounts for 20-70%, such as 30-50%, especially 35-45% of the weight of the seed.

4. A method as defined in any of claims 1- 3, in which a high-fibre fraction rich in fibres is further separated from the fibre faction.

5. A method as defined in any of claims 1-4, in which a lignan fraction rich in lignan is further separated from the fibre faction.

6. A method as defined in any of claims 1-5, in which oil is separated from the fibre faction, especially by means of extraction.

7. A method as defined in any of claims 1-6, in which oil is separated from the inner portion remaining after the abrasion.

8. A method as defined in claim 7, in which a protein fraction and carbohydrate fraction of the core are separated from the residue remaining after the oil separation.

9. A method as defined in any of claims 1-8, in which the abrasion is performed in a mill equipped with millstones.

10. A method as defined in any of claims 1-9, in which the separated fibre fraction is bleached.

11. A method as defined in claim 10, in which the bleaching is performed with a bleaching solution containing water and alcohol.

12. A method as defined in claim 11, in which the alcohol is C1-C5 alcohol, such as ethanol or isopropanol, especially isopropanol.

13. A method as defined in claims 11 or 12, in which the alcohol amount is 2-5 times the amount of fibre fraction.

14. A method as defined in any of claims 11-13, in which the bleaching solution also contains hydrogen peroxide, e.g. 2-7%, such as 4-6%, especially about 5%.

15. A method as defined in any of claims 11-14, in which the fibre fraction is treated with an aqueous solution for e.g. 0.5-12 h before the treatment with the bleaching solution.

16. A method as defined in claim 15, in which the aqueous solution contains enzymes such as lipases or proteases.

17. A method as defined in claims 15 or 16, in which the slurry obtained in the water treatment is mixed with said alcohol in order to perform bleaching.

18. A method as defined in claims 14 and 17, in which the hydrogen peroxide is added to said aqueous solution.

19. A method as defined in any of claims 10-18, in which the fibre fraction is thermally treated before the bleaching, e.g. for 0.5-2 h, at a temperature of e.g. 40-80 °C, especially in vacuum.

## Patentansprüche

1. Verfahren zum Entfernen der Flachssamen-Hülle von dem Samenkern mittels Abrasion, **dadurch gekennzeichnet, dass** der zuerst entfernte äußere Teil der Hülle als ein Schleimstoff-Anteil abgeschieden und dann der an zweiter Stelle entfernte innere Teil als ein Faser-Anteil abgeschieden wird.

2. Verfahren nach Anspruch 1, bei dem der abgeschiedene Schleimstoff-Anteil 3-10 %, beispielsweise 5-8 % des Samengewichts ausmacht.

3. Verfahren nach Anspruch 1 oder 2, bei dem der abgeschiedene Faser-Anteil 20-70 %, beispielsweise 30-50 %, vornehmlich 35-45 % des Samengewichts ausmacht.

4. Verfahren nach einem der Ansprüche 1-3, bei dem des Weiteren ein an Fasern reicher Faser-Anteil von dem Faser-Anteil abgeschieden wird.

5. Verfahren nach einem der Ansprüche 1-4, bei dem des Weiteren ein an Lignan reicher Lignan-Anteil von dem Faser-Anteil abgeschieden wird.

6. Verfahren nach einem der Ansprüche 1-5, bei dem insbesondere mittels Extraktion Öl von dem Faser-Anteil abgeschieden wird.

7. Verfahren nach einem der Ansprüche 1-6, bei dem von dem nach der Abrasion verbleibenden inneren Teil Öl abgeschieden wird.

8. Verfahren nach Anspruch 7, bei dem ein Protein-Anteil und ein Kohlehydrat-Anteil des Kerns von dem nach der Ölabscheidung verbleibenden Rest abgeschieden wird.

9. Verfahren nach einem der Ansprüche 1-8, bei dem die Abrasion in einer mit Mühlsteinen ausgerüsteten Mühle ausgeführt wird.

10. Verfahren nach einem der Ansprüche 1-9, bei dem der abgeschiedene Faser-Anteil gebleicht wird.

11. Verfahren nach Anspruch 10, bei dem das Bleichen mit einer Wasser und Alkohol enthaltenden Bleichlösung ausgeführt wird.

12. Verfahrën nach Anspruch 11, bei dem der Alkohol ein C1-C5 Alkohol, wie beispielsweise Ethanol oder Isopropanol, vornehmlich Isopropanol ist.

13. Verfahren nach Anspruch 11 oder 12, bei dem der Alkoholanteil 2-5 mal dem Betrag des Faser-Anteils entspricht.

14. Verfahren nach einem der Ansprüche 11-13, bei dem die Bleichlösung auch Wasserstoffperoxyd, beispielsweise 2-7 %, so z. B. 4-6 %, vornehmlich ca. 5 % enthält.

15. Verfahren nach einem der Ansprüche 11-14, bei dem der Faser-Anteil mit einer wässrigen Lösung für beispielsweise 0,5-12 h vor der Behandlung mit der Bleichlösung behandelt wird.

16. Verfahren nach Anspruch 15, bei dem die wässrige Lösung Enzyme, wie beispielsweise Lipasen oder Proteasen enthält.

17. Verfahren nach Anspruch 15 oder 16, bei dem die bei der Wasserbehandlung erhaltene wässrige Masse mit dem Alkohol vermischt wird. um ein Bleichen auszuführen.

18. Verfahren nach Anspruch 14 und 17, bei dem das Wasserstoffperoxyd zu der wässrigen Lösung hinzugefügt wird.

19. Verfahren nach einem der Ansprüche 10-18, bei dem der Faser-Anteil vor dem Bleichen beispielsweise für 0,5-2 h bei einer Temperatur von beispielsweise 40-80°C, insbesondere in einem Vakuum thermisch behandelt wird.

## Revendications

1. Procédé pour retirer la coque de graine de lin depuis le noyau de graine par abrasion, **caractérisé en ce que** la partie extérieure retirée en premier de la coque est séparée sous forme d'une fraction mucilagineuse et ensuite la partie intérieure retirée en deuxième est séparée sous forme d'une fraction fibreuse.

2. Procédé selon la revendication 1, dans lequel la fraction mucilagineuse séparée équivaut entre 3 et 10 %, tel que 5 à 8 %, du poids de la graine.

3. Procédé selon la revendication 1 ou 2, dans lequel la fraction fibreuse séparée équivaut entre 20 et 70 %, tel que 30 à 50 %, en particulier 35 à 45 % du poids de la graine.

4. Procédé selon l'une quelconque des revendications 1 à 3, dans lequel une fraction à teneur en fibres élevée riche en fibres est de plus séparée de la fraction fibreuse.

5. Procédé selon l'une quelconque des revendications 1 à 4, dans lequel une fraction de lignane riche en lignane est de plus séparée de la fraction fibreuse.

6. Procédé selon l'une quelconque des revendications 1 à 5, dans lequel l'huile est séparée de la fraction fibreuse, en particulier par l'intermédiaire d'une extraction.

7. Procédé selon l'une quelconque des revendications 1 à 6, dans lequel l'huile est séparée de la partie intérieure restant après l'abrasion.

8. Procédé selon la revendication 7, dans lequel une fraction protéinique et une fraction d'hydrate de carbone du noyau sont séparées du résidu restant après la séparation d'huile.

9. Procédé selon l'une quelconque des revendications 1 à 8, dans lequel l'abrasion est effectuée dans un broyeur équipé de pierres de broyage.

10. Procédé selon l'une quelconque des revendications 1 à 9, dans lequel la fraction fibreuse séparée est blanchie.

11. Procédé selon la revendication 10, dans lequel le blanchiment est effectué à l'aide d'une solution de blanchiment contenant de l'eau et un alcool.

12. Procédé selon la revendication 11, dans lequel l'alcool est un alcool C1-C5, tel que de l'éthanol ou de l'isopropanol, en particulier de l'isopropanol.

13. Procédé selon la revendication 11 ou 12, dans lequel la quantité d'alcool est égale à 2 à 5 fois la quantité de fraction fibreuse.

14. Procédé selon l'une quelconque des revendications 11 à 13, dans lequel la solution de blanchiment contient également du peroxyde d'hydrogène, par exemple de 2 à 7 %, tel que 4 à 6 %, en particulier environ 5 %.

15. Procédé selon l'une quelconque des revendications 11 à 14, dans lequel la fraction fibreuse est traitée à l'aide d'une solution aqueuse pendant par exemple 0,5 à 12 h avant le traitement à l'aide de la solution de blanchiment.

16. Procédé selon la revendication 15, dans lequel la solution aqueuse contient des enzymes telles que des lipases ou des protéases.

17. Procédé selon la revendication 15 ou 16, dans lequel la boue obtenue dans le traitement d'eau est mélangée audit alcool afin d'effectuer le blanchiment.

18. Procédé selon les revendications 14 et 17, dans lequel le peroxyde d'hydrogène est ajouté à ladite solution aqueuse.

19. Procédé selon l'une quelconque des revendications 10 à 18, dans lequel la fraction fibreuse est thermiquement traitée avant le blanchiment, par exemple pendant 0,5 à 2 h, à une température par exemple de 40 à 80°C, en particulier sous vide.
